# EUROPÄISCHE PATENTSCHRIFT

(11) **EP 2 951 409 B1**
(45) Veröffentlichungstag und Bekanntmachung des Hinweises auf die Patenterteilung: **26.04.2017**
(21) Anmeldenummer: 13815690.6
(22) Anmeldetag: 16.12.2013
(51) Int. Cl.: F01N 3/20

(54) **ZUFÜHRSYSTEM FÜR EIN REDUKTIONSMITTEL IN EIN ABGASSYSTEM**
SUPPLY SYSTEM FOR SUPPLYING A REDUCING AGENT INTO AN EXHAUST SYSTEM
SYSTÈME D'INTRODUCTION D'UN AGENT RÉDUCTEUR DANS UN SYSTÈME DE GAZ D'ÉCHAPPEMENT

(30) Priorität: 30.01.2013 DE 102013201537
(43) Veröffentlichungstag der Anmeldung: 09.12.2015
(73) Patentinhaber: MTU Friedrichshafen GmbH, 88045 Friedrichshafen (DE)
(72) Erfinder: WINKLER, Christian, 78465 Konstanz (DE); SINZENICH, Holger, 88677 Markdorf (DE); SAUTER, Benjamin, 88697 Bermatingen (DE)
(74) Vertreter: RRPS European Patent Attorneys
(86) Internationale Anmeldenummer: PCT/EP2013/003797
(87) Internationale Veröffentlichungsnummer: WO 2014/117798

(56) Entgegenhaltungen:
- EP-A1- 1 656 986
- WO-A1-2008/006840

## Beschreibung

Die Erfindung betrifft ein Zuführsystem für ein Medium gemäß Oberbegriff des Anspruchs 1, wie z.B. im Dokument WO2008/006840A1 gezeigt.

Zuführsysteme der hier angesprochenen Art sind bekannt. Aus der deutschen Offenlegungsschrift DE 10 2004 046 881 A1 geht ein Zuführsystem für eine Abgasreinigungsvorrichtung zur Behandlung von Abgasen einer Brennkraftmaschine hervor, welches ein Vorratsgefäß für das Medium, eine Dosiereinrichtung zum Eindosieren des Mediums in eine Abgasleitung einer Brennkraftmaschine, und eine Versorgungsleitung umfasst. Die Versorgungsleitung weist eine Vorlaufleitung auf, die zur Zuführung des Mediums zu der Dosiereinrichtung dient. Weiter weist die Versorgungsleitung eine Rücklaufleitung auf, über die das Medium von der Dosiereinrichtung in das Vorratsgefäß zurückgeführt werden kann. Solche Zuführsysteme werden insbesondere eingesetzt, um Stickoxide in Abgasen von Brennkraftmaschinen zu reduzieren. Als Medium wird in diesem Fall ein Reduktionsmittel verwendet, welches der Abgasleitung stromaufwärts eines selektiven Katalysators zur Durchführung einer selektiven katalytischen Reduktion zugeführt wird. Vorzugsweise wird in dem selektiven Katalysator Ammoniak mit Stickoxiden zu Stickstoff und Wasser umgesetzt, wobei das Ammoniak zuvor typischerweise durch Hydrolyse aus dem in das Abgas flüssig eingedüsten Reduktionsmittel freigesetzt wird. Als Reduktionsmittel wird insbesondere eine Harnstofflösung, typischerweise eine wässrige Harnstofflösung eingesetzt. Um eine sichere Funktion der Dosiereinrichtung zu gewährleisten, muss diese im Betrieb des Zuführsystems gekühlt werden, weil sie in Kontakt mit dem heißen Abgas beziehungsweise der heißen Abgasleitung steht. Hierzu ist bei bekannten Zuführsystemen, insbesondere bei dem aus der DE 10 2004 046 881 A1 bekannten Zuführsystem vorgesehen, dass die Dosiereinrichtung im Betrieb von dem Medium durchströmt wird, wobei dieses von einem Vorlaufanschluss der Dosiereinrichtung zu einem Rücklaufanschluss derselben strömt.

Bei solchen Zuführsystemen besteht die Gefahr, dass das unter Normalbedingungen flüssige Reduktionsmittel bei tiefen Umgebungstemperaturen einfriert. Hierdurch kann es zu Beschädigungen insbesondere der Dosiereinrichtung kommen. Es sind zahlreiche Maßnahmen bekannt, um eine Beschädigung der Dosiereinrichtung durch gefrierendes Medium zu vermeiden. Insbesondere schlägt die DE 10 2004 046 881 A1 eine Lösung vor, um einerseits eine möglichst gute Isolierung des Zuführsystems in Hinblick auf das Gefrierverhalten des Mediums und andererseits eine möglichst geringe Isolierwirkung für eine gute Wärmeabfuhr zu gewährleisten. Bei niedrigen Umgebungstemperaturen besteht jedoch auch die Gefahr, dass das in dem Vorratsgefäß angeordnete Medium einfriert. Da hier typischerweise das größte Volumen an Medium vorliegt, dauert es besonders lange, bis das Medium in dem Vorratsgefäß aufgetaut ist. Zwischenzeitlich ist es möglich, dass ein Kreislauf des Mediums entlang der Versorgungsleitung, der insbesondere zur Kühlung der Dosiereinrichtung nötig ist, zum Erliegen kommt, weil er durch gefrorenes Reduktionsmittel in dem Vorratsgefäß, insbesondere im Bereich von Anschlüssen der Versorgungsleitung zu dem Vorratsgefäß, blockiert wird. Daher ist es möglich, dass die Dosiereinrichtung unter solchen Betriebsbedingungen, insbesondere auch bei bereits aufgetautem Medium in der Versorgungsleitung und in der Dosiereinrichtung, nicht ausreichend gekühlt wird, weil kein Medium durch die Dosiereinrichtung gefördert werden kann. Eine Beschädigung der Dosiereinrichtung durch erhöhte thermische Belastung ist dann möglich, insbesondere weil das Reduktionsmittelvolumen im Tank deutlich länger zum Auftauen braucht als das sehr viel kleinere Volumen in der Versorgungsleitung.

Der Erfindung liegt die Aufgabe zugrunde, ein Zuführsystem zu schaffen, welches die genannten Nachteile nicht aufweist, wobei insbesondere eine Beschädigung durch eine erhöhte thermische Belastung vermieden wird, wenn ein Medienkreislauf im Bereich des Vorratsgefäßes durch gefrorenes Medium blockiert ist.

Die Aufgabe wird gelöst, indem ein Zuführsystem mit den Merkmalen des Anspruchs 1 geschaffen wird. Dieses zeichnet sich dadurch aus, dass die Versorgungsleitung eine zusätzliche Fluidverbindung zwischen der Vorlaufleitung und der Rücklaufleitung umfasst. Die zusätzliche Fluidverbindung mündet stromaufwärts des Vorlaufanschlusses der Dosiereinrichtung in die Vorlaufleitung und stromabwärts des Rücklaufanschlusses der Dosiereinrichtung in die Rücklaufleitung. Wird der Medienkreislauf, welcher das Vorratsgefäß umfasst, durch in diesem beziehungsweise im Bereich der Anschlüsse der Versorgungsleitung an das Versorgungsgefäß vorhandenes, gefrorenes Medium blockiert, ist es gleichwohl möglich, Medium zur Kühlung der Dosiereinrichtung entlang der Versorgungsleitung in einem Kreislauf zu führen, nämlich über die zusätzliche Fluidverbindung, durch welche die Vorlaufleitung mit der Rücklaufleitung verbunden ist. Der Kreislauf ist dann nicht über das Vorratsgefäß, sondern vielmehr durch die zusätzliche Fluidverbindung geschlossen. Eine ausreichende Kühlung der Dosiereinrichtung wird somit unabhängig von einer Auftaudauer eines in dem Vorratsgefäß vorliegenden, gefrorenen Medienvolumens gewährleistet, sodass eine Beschädigung der Dosiereinrichtung durch eine thermische Überlastung wirksam vermieden wird. Ist schließlich auch das in dem Vorratsgefäß vorliegende Medienvolumen aufgetaut, kann der Kreislauf des Mediums wiederum über das Vorratsgefäß verlaufen.

Es wird ein Zuführsystem bevorzugt, das sich dadurch auszeichnet, dass die zusätzliche Fluidverbindung als Umgehungsleitung ausgebildet ist. Durch diese ist das Medium unter Umgehung des Vorratsgefäßes entlang der Versorgungsleitung förderbar. Die zusätzliche Fluidverbindung stellt demnach einen Bypass dar, der - wie bereits beschrieben - vorgesehen ist, um einen Kreislauf des Mediums zur Kühlung der Dosiereinrichtung zu schließen, falls der ansonsten vorgesehene Kreislauf durch gefrorenes Medium im Bereich des Vorratsgefäßes blockiert wird. Unter normalen Bedingungen, wenn das gesamte Medium flüssig ist, strömt dieses von dem Vorratsgefäß über die Vorlaufleitung zu dem Vorlaufanschluss der Dosiereinrichtung, durchströmt diese zur Kühlung und tritt durch deren Rücklaufanschluss in die Rücklaufleitung ein, durch die es wiederum zurück zu dem Vorratsgefäß strömt. In dem Fall, in dem der Kreislauf im Bereich des Vorratsgefäßes durch gefrorenes Medium blockiert ist, strömt das Medium über die zusätzliche Fluidverbindung, insbesondere die Umgehungsleitung, von der Rücklaufleitung zurück in die Vorlaufleitung, von dieser zu dem Vorlaufanschluss der Dosiereinrichtung, durch diese hindurch zu deren Rücklaufanschluss, von diesem in die Rücklaufleitung, und durch diese wiederum zu der zusätzlichen Fluidverbindung, insbesondere der Umgehungsleitung. Ein dauerhafter Medienstrom durch die Dosiereinrichtung wird daher aufrechterhalten und kann Wärme im Bereich derselben abführen, sodass sie thermisch nicht überlastet wird.

Es wird auch ein Zuführsystem bevorzugt, das sich dadurch auszeichnet, dass eine Pumpe zur Förderung des Mediums in der Vorlaufleitung angeordnet ist, wobei die Pumpe stromabwärts der Mündung der zusätzlichen Fluidverbindung in die Vorlaufleitung angeordnet ist. Alternativ oder zusätzlich ist vorzugsweise eine Pumpe zur Förderung des Mediums in der Rücklaufleitung angeordnet, wobei die Pumpe stromaufwärts der Mündung der zusätzlichen Fluidverbindung in die Rücklaufleitung angeordnet ist. Durch die Pumpe ist das Medium in einem normalen Betriebszustand von dem Vorratsgefäß zu der Dosiereinrichtung und wiederum zurück in das Vorratsgefäß förderbar. Ist allerdings der Kreislauf des Mediums im Bereich des Vorratsgefäßes blockiert, ist aufgrund der Anordnung der Pumpe stromaufwärts der Mündung der zusätzlichen Fluidverbindung in die Rücklaufleitung oder stromabwärts der Mündung der zusätzlichen Fluidverbindung in die Vorlaufleitung ein Medienstrom entlang eines Kreislaufs förderbar, der durch die zusätzliche Fluidverbindung unter Umgehung des Vorratsgefäßes geschlossen ist.

Es wird auch ein Zuführsystem bevorzugt, dass sich dadurch auszeichnet, dass die zusätzliche Fluidverbindung unmittelbar stromaufwärts des Vorratsgefäßes in die Rücklaufleitung und unmittelbar stromabwärts des Vorratsgefäßes in die Vorlaufleitung mündet. Insgesamt ist die zusätzliche Fluidverbindung bevorzugt in unmittelbarer Nähe des Vorratsgefäßes angeordnet. Dies bedeutet insbesondere, dass zwischen dem Vorratsgefäß und den Mündungen der zusätzlichen Fluidverbindung keine weiteren Elemente des Zuführsystems, insbesondere keine Pumpe und nicht die Dosiereinrichtung sowie keine Abzweigung zu der Dosiereinrichtung angeordnet sind. Insbesondere ist eine Wegstrecke von einem Auslass und einem Einlass des Vorratsgefäßes für das Medium beziehungsweise von Anschlüssen der Versorgungsleitung an das Vorratsgefäß zu den Mündungen der zusätzlichen Fluidverbindung in die Vorlaufleitung einerseits und die Rücklaufleitung andererseits möglichst kurz ausgebildet, damit der Kreislauf für das Medium unter Umgehung des Vorratsgefäßes möglichst nah an diesem geschlossen ist. Dabei wird der Abstand jedoch bevorzugt so lang ausgebildet, dass eine Blockierung der Mündungen der zusätzlichen Fluidverbindung durch im Bereich des Vorratsgefäßes gefrorenes Medium ausgeschlossen ist, beziehungsweise dass im Mündungsbereich gefrorenes Medium sehr viel schneller auftaut als das in dem Vorratsgefäß angeordnete, gefrorene Medium, sodass eine ausreichende Kühlung der Dosiereinrichtung rechtzeitig vor dem Auftreten thermisch bedingter Schäden gewährleistet ist.

Es wird auch ein Zuführsystem bevorzugt, das sich dadurch auszeichnet, dass die zusätzliche Fluidverbindung durch mindestens ein T-Stück bereitgestellt wird. Dabei ist das mindestens eine T-Stück Teil der Vorlaufleitung. Alternativ oder zusätzlich ist ein T-Stück vorgesehen, welches Teil der Rücklaufleitung ist. Ist ein T-Stück vorgesehen, so stellt quasi der Längsschenkel des T die zusätzliche Fluidverbindung bereit, während der Querschenkel Teil der Vorlaufleitung oder der Rücklaufleitung ist. Sind zwei T-Stücke vorgesehen, werden diese vorzugsweise im Bereich der Enden ihrer Längsschenkel miteinander verbunden, wobei diese die zusätzliche Fluidverbindung bereitstellen. Der Querschenkel des einen T ist in diesem Fall Teil der Vorlaufleitung, während der Querschenkel des anderen T Teil der Rücklaufleitung ist. Insgesamt ergibt sich so eine im Wesentlichen H-förmige Konfiguration des Abschnitts der Versorgungsleitung, welcher die zusätzliche Fluidverbindung aufweist.

Es wird auch ein Zuführsystem bevorzugt, das sich dadurch auszeichnet, dass ein unmittelbar dem Vorratsgefäß zugewandter Abschnitt der Versorgungsleitung H-förmig ausgebildet ist. Dabei ist ein erster Schenkel des H Teil der Vorlaufleitung. Ein zu dem ersten Schenkel paralleler, zweiter Schenkel des H ist Teil der Rücklaufleitung. Die zusätzliche Fluidverbindung wird durch einen dritten, zu dem ersten und dem zweiten Schenkel quer angeordneten Schenkel des H bereitgestellt. Hierbei sprechen die Begriffe "parallel" und "quer" nicht notwendig räumlich-geometrische Orientierungen, sondern vielmehr fluidtechnische Verschaltungen an, insbesondere also eine Anordnung paralleler beziehungsweise antiparalleler Strömungen und Querströmungen, wobei sich im Bereich der Vorlaufleitung und der Rücklaufleitung antiparallele Strömungen und im Bereich der zusätzlichen Fluidverbindung eine Querströmung ergibt. Bei einem bevorzugten Ausführungsbeispiel ist allerdings vorgesehen, dass der dem Vorratsgefäß zugewandte Abschnitt der Versorgungsleitung tatsächlich auch räumlich-geometrisch H-förmig ausgebildet ist, mit zwei zumindest im Wesentlichen zueinander parallelen Schenkeln, von denen ein erster Teil der Vorlaufleitung und ein zweiter Teil der Rücklaufleitung ist, wobei ein hierzu quer, insbesondere senkrecht angeordneter Schenkel die zusätzliche Fluidverbindung bereitstellt. Dies entspricht im Wesentlichen der Konfiguration, die durch Verbindung zweier T-Stücke an den Enden ihrer Längsschenkel hergestellt werden kann.

Bei einem Ausführungsbeispiel ist es möglich, dass der unmittelbar dem Vorratsgefäß zugewandte Abschnitt der Versorgungsleitung als H-förmiges Anschlussstück ausgebildet ist, welches im Bereich der einen Enden der parallelen Schenkel mit den Anschlüssen des Vorratsgefäßes und im Bereich der gegenüberliegenden Enden der parallelen Schenkel mit dem zu der Dosiereinrichtung führenden Teil der Vorlaufleitung einerseits und dem von der Dosiereinrichtung kommenden Teil der Rücklaufleitung andererseits verbunden ist. Es ist möglich, dass an dem H-förmigen Anschlussstück vorgefertigte Anschlüsse, insbesondere Steckverbindungen vorgesehen sind. Es ist möglich, dass das Anschlussstück einstückig ausgebildet ist. Bei einem anderen Ausführungsbeispiel ist vorgesehen, dass das Anschlussstück aus zwei T-Stücken oder anderweitig aus separaten Teilen zusammengesetzt ist.

Es wird ein Zuführsystem bevorzugt, das sich dadurch auszeichnet, dass die Versorgungsleitung zumindest bereichsweise beheizbar ausgebildet ist. Dabei ist sie besonders bevorzugt zumindest im Bereich des H-förmigen Abschnitts beheizbar ausgebildet. Durch eine Beheizung der Versorgungsleitung ist es möglich, bei niedrigen Umgebungstemperaturen in dieser gefrorenes Medium nach Inbetriebnahme des Zuführsystems rasch aufzutauen, sodass einerseits eine möglichst rasche Eindüsung des Mediums in eine Abgasleitung nach Start der Brennkraftmaschine und andererseits eine rasche und effiziente Kühlung der Dosiereinrichtung zur Vermeidung einer Schädigung aufgrund thermischer Belastung durch heißes Abgas sichergestellt wird. Bei einem Ausführungsbeispiel ist es möglich, dass lediglich die Vorlaufleitung zumindest bereichsweise beheizbar ausgebildet ist. Bei einem weiteren Ausführungsbeispiel ist es möglich, dass lediglich die Rücklaufleitung zumindest bereichsweise beheizbar ausgebildet ist. Bei einem anderen Ausführungsbeispiel ist es möglich, dass sowohl die Vorlaufheizung als auch die Rücklaufleitung zumindest bereichsweise beheizbar ausgebildet sind. Alternativ oder zusätzlich ist es möglich, dass die zusätzliche Fluidverbindung beheizbar ausgebildet ist. Insbesondere ist es möglich, dass ein im Wesentlichen H-förmiges Anschlussstück, welches die zusätzliche Fluidverbindung umfasst, beheizbar ausgebildet ist.

Zum Beheizen der Versorgungsleitung ist vorzugsweise eine elektrische Heizeinrichtung vorgesehen. Insbesondere ist es möglich, dass die Versorgungsleitung bereichsweise mit einem Heizdraht umwickelt ist. Alternativ oder zusätzlich ist es möglich, dass eine Einrichtung vorgesehen ist, mit deren Hilfe die Versorgungsleitung durch Kühlwasser der Brennkraftmaschine geheizt werden kann. Unabhängig davon, wie die Heizeinrichtung ausgebildet ist, weist diese bevorzugt eine Heizleistung von 25 Watt pro Meter auf.

Es wird auch ein Zuführsystem bevorzugt, dass sich dadurch auszeichnet, dass in der zusätzlichen Fluidverbindung eine Drosseleinrichtung oder eine Druckhalteeinrichtung angeordnet ist. Eine solche Einrichtung bewirkt bevorzugt, dass zumindest ein Großteil des im Kreislauf geführten Mediums nur dann durch die zusätzliche Fluidverbindung strömt, wenn die Verbindung zwischen Vorlaufleitung und Rücklaufleitung im Bereich des Vorratsgefäßes tatsächlich durch gefrorenes Medium blockiert ist. Ist dagegen der Kreislauf zumindest auch über das Vorratsgefäß geschlossen, fließt vorzugsweise zumindest die Hauptmenge, besonders bevorzugt das gesamte im Kreislauf geförderte Medium über das Vorratsgefäß.

Die Drosseleinrichtung ist daher vorzugsweise so ausgebildet, dass ein Strömungsquerschnitt entlang der zusätzlichen Fluidverbindung kleiner ist als ein Strömungsquerschnitt entlang eines Fluidpfades durch das Vorratsgefäß, solange dieser nicht durch gefrorenes Medium zumindest teilweise blockiert ist.

Vorzugsweise umfasst die Drosseleinrichtung einen Bereich mit reduziertem Leitungsquerschnitt. Bei einem bevorzugten Ausführungsbeispiel beträgt ein Leitungsquerschnitt stromaufwärts und stromabwärts des Bereichs mit reduziertem Leitungsquerschnitt 2,0 mm, wobei der Querschnitt in dem Bereich mit reduziertem Leitungsquerschnitt auf 1,5 mm, vorzugsweise auf 1,0 mm reduziert ist.

Bei einem bevorzugten Ausführungsbeispiel ist der Bereich mit reduziertem Leitungsquerschnitt im Längsschenkel eines T-Stücks angeordnet.

Alternativ oder zusätzlich ist es möglich, dass die Drosseleinrichtung ein verstellbares Drosselelement umfasst. Durch das verstellbare Drosselelement ist vorzugsweise ein Strömungsquerschnitt durch die zusätzliche Fluidverbindung variierbar. Insbesondere ist es dann möglich, den Strömungsquerschnitt der zusätzlichen Fluidverbindung zu vergrößern, wenn ein Fluidpfad durch das Vorratsgefäß von gefrorenem Medium blockiert ist. Ist dieser Fluidpfad dagegen frei, insbesondere wenn das Medium vollständig aufgetaut ist, kann der Strömungsquerschnitt der zusätzlichen Fluidverbindung verringert werden, um zu gewährleisten, dass eine Hauptmenge des im Kreislauf geförderten Mediums durch das Vorratsgefäß strömt. Insbesondere kann vorgesehen sein, dass die zusätzliche Fluidverbindung durch das verstellbare Drosselelement vollständig gesperrt werden kann. Diese Funktionalität entspricht vorzugsweise der Funktion einer Druckhalteeinrichtung. Bei einem Ausführungsbeispiel ist vorgesehen, dass das verstellbare Drosselelement als Ventil ausgebildet ist.

Bevorzugt ist das verstellbare Drosselelement durch ein Steuergerät, insbesondere ein Motorsteuergerät einer Brennkraftmaschine, ansteuerbar.

Ist eine Druckhalteeinrichtung in der zusätzlichen Fluidverbindung vorgesehen, ist diese bevorzugt so ausgebildet, dass sie bei einem normalen Druck in der Rücklaufleitung, der unter einem Drucksollwert der Druckhalteeinrichtung liegt und vorherrscht, wenn der Fluidpfad über das Vorratsgefäß nicht blockiert ist, geschlossen ist, also die zusätzliche Fluidverbindung sperrt. Ist die Verbindung zwischen Vorlaufleitung und Rücklaufleitung im Bereich des Vorratsgefäßes durch gefrorenes Medium blockiert, steigt der Druck in der Rücklaufleitung. Der Drucksollwert der Druckhalteeinrichtung ist bevorzugt so gewählt, dass der Druck in der Rücklaufleitung und damit auch in der zusätzlichen Fluidverbindung stromaufwärts der Druckhalteeinrichtung in diesem Fall den Drucksollwert übersteigt, wobei die Druckhalteeinrichtung die zusätzliche Fluidverbindung freigibt. Bevorzugt sperrt sie diese wieder, wenn der Drucksollwert unterschritten wird.

Die Druckhalteeinrichtung ist vorzugsweise als Druckhalteventil ausgebildet. Besonders bevorzugt ist die Druckhalteeinrichtung durch ein Steuergerät, insbesondere ein Motorsteuergerät einer Brennkraftmaschine, ansteuerbar, wobei bevorzugt der Drucksollwert durch das Steuergerät veränderbar ist.

Es wird auch ein Zuführsystem bevorzugt, dass sich dadurch auszeichnet, dass es zur Einleitung eines Reduktionsmittels in eine Abgasleitung einer Brennkraftmaschine ausgebildet ist. Vorzugsweise ist dabei vorgesehen, dass das Zuführsystem ein Reduktionsmittel in dem Vorratsgefäß des Zuführsystems aufweist.

Schließlich wird ein Zuführsystem bevorzugt, das sich dadurch auszeichnet, dass es zur Eindosierung einer Harnstofflösung, insbesondere einer wässrigen Harnstofflösung, in eine Abgasleitung einer Brennkraftmaschine ausgebildet ist. Dabei ist besonders bevorzugt vorgesehen, dass in dem Vorratsgefäß des Zuführsystems eine Harnstofflösung, insbesondere eine wässrige Harnstofflösung, angeordnet ist.

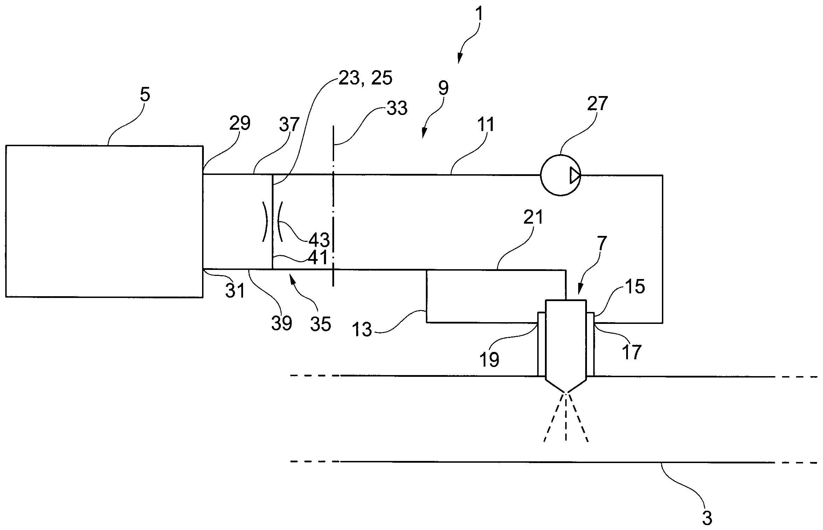

Die Erfindung wird im Folgenden anhand der Zeichnung erläutert. Dabei zeigt die einzige Figur eine schematische Darstellung eines Ausführungsbeispiels eines Zuführsystems.

Die einzige Figur zeigt eine schematische Darstellung eines Ausführungsbeispiels eines Zuführsystems 1, welches vorzugsweise der Zuführung eines Reduktionsmittels, insbesondere einer wässrigen Harnstofflösung, in eine Abgasleitung 3 einer nicht dargestellten Brennkraftmaschine dient.

Das Zuführsystem 1 weist ein Vorratsgefäß 5 für das Medium auf, sowie eine Dosiereinrichtung 7, durch die das Medium vorzugsweise stromaufwärts eines selektiven Katalysators in die Abgasleitung 3 eindosierbar ist.

Das Zuführsystem 1 umfasst weiter eine Versorgungsleitung 9, die eine Vorlaufleitung 11 umfasst, durch die das Medium zu der Dosiereinrichtung 7 förderbar ist. Durch eine Rücklaufleitung 13 ist das Medium von der Dosiereinrichtung in das Vorratsgefäß 5 zurück förderbar. Bei dem dargestellten Ausführungsbeispiel weist die Dosiereinrichtung 7 einen Kühlmantel 15 auf, in welche die Vorlaufleitung 11 im Bereich eines Vorlaufanschlusses 17 mündet. Der Kühlmantel 15 weist außerdem einen Rücklaufanschluss 19 auf, durch den das Medium in die Rücklaufleitung 13 strömen kann. Von der Vorlaufleitung 11 her kommend strömt das Medium daher durch den Vorlaufanschluss 17 in den Kühlmantel 15 und tritt aus diesem durch den Rücklaufanschluss 19 in die Rücklaufleitung 13 aus. Auf diese Weise wird Wärme durch das den Kühlmantel 15 durchströmende Medium von der Dosiereinrichtung 7 weggeführt, sodass diese gekühlt wird, um eine Beschädigung durch Überhitzung insbesondere durch das in der Abgasleitung 3 strömende heiße Abgas zu vermeiden.

Bei dem dargestellten Ausführungsbeispiel ist eine Abzweigungsleitung 21 vorgesehen, die einerseits mit der Rücklaufleitung 13 und andererseits mit der Dosiereinrichtung 7 derart in Fluidverbindung steht, dass der Dosiereinrichtung 7 durch die Abzweigungsleitung 21 Medium zugeführt werden kann, welches schließlich in die Abgasleitung 3 eingedüst wird.

Bei einem alternativen Ausführungsbeispiel ist vorgesehen, dass eine entsprechende Abzweigungsleitung zu der Vorlaufleitung 11 besteht. Bei einem weiteren alternativen Ausführungsbeispiel ist vorgesehen, dass das einzudosierende Medium im Inneren der Dosiereinrichtung 7 der Kühlströmung, insbesondere dem Kühlmantel 15 entnommen wird, sodass hier quasi eine interne Abzweigungsleitung vorgesehen ist.

Vorzugsweise ist das pro Zeiteinheit in die Abgasleitung 3 eindosierte Medienvolumen klein im Vergleich zu dem im Kreislauf geführten, vorzugsweise auch zu dem die Dosiereinrichtung 7, insbesondere den Kühlmantel 15 zur Kühlung durchströmenden Medienstrom. Dem kühlenden Medienstrom wird also nur ein Bruchteil an Medium für eine tatsächliche Eindüsung in die Abgasleitung 3 entnommen.

Es zeigt sich, dass im Betrieb des Zuführsystems 1 Medium von dem Vorratsgefäß 5 über die Vorlaufleitung 11 durch den Kühlmantel 15 und die Rücklaufleitung 13 zurück zu dem Vorratsgefäß 5 gefördert wird. Ist das Medium bei niedrigen Temperaturen gefroren, muss dieses zumindest bereichsweise zunächst wieder aufgetaut werden, bevor das Zuführsystem 1 bestimmungsgemäß funktionieren kann. Hierzu ist die Versorgungsleitung 9 vorzugsweise zumindest bereichsweise beheizbar. Dabei zeigt sich, dass das in der Versorgungsleitung 9 und auch in der Dosiereinrichtung 7 angeordnete Medium aufgrund seines vergleichsweise kleinen Volumens vergleichsweise rasch aufgetaut werden kann, während das sehr viel größere Medienvolumen in dem Vorratsgefäß 5 sehr viel länger braucht, um aufgetaut zu werden. Dies ist selbst dann der Fall, wenn - was bevorzugt wird - auch das Vorratsgefäß 5 zumindest bereichsweise beheizbar ausgebildet ist.

Es kann daher ein Betriebszustand auftreten, in dem zwar über die Abzweigungsleitung 21 durch die Dosiereinrichtung 7 aufgetautes Medium in die Abgasleitung 3 eindüsbar ist, wobei zugleich aber der Medienkreislauf zur Kühlung der Dosiereinrichtung 7 aufgrund von in dem Vorratsgefäß 5 angeordnetem, gefrorenen Medium blockiert ist. Es ist dann gegebenenfalls keine ausreichende Kühlung der Dosiereinrichtung 7 möglich, sodass diese gegebenenfalls durch Überhitzung beschädigt wird.

Um dies zu vermeiden, ist eine zusätzliche Fluidverbindung 23 vorgesehen, welche die Vorlaufleitung 9 mit der Rücklaufleitung 13 stromaufwärts des Vorlaufanschlusses 17 und stromabwärts des Rücklaufanschlusses 19 verbindet. Die zusätzliche Fluidverbindung 23 ist als Umgehungsleitung 25 ausgebildet, durch welche das Medium unter Umgehung des Vorratsgefäßes 5 entlang der Versorgungsleitung 9 förderbar ist. Es ist daher möglich, das Medium auch bei blockiertem Vorratsgefäß 5 zur Kühlung der Dosiereinrichtung 7 im Kreislauf zu fördern. Dabei ist wesentlich, dass über die Abzweigungsleitung 21 nur eine kleine Menge an Medium zur Eindosierung in die Abgasleitung 3 entnommen wird, weil sonst der Kreislauf rasch leerlaufen würde, bevor das Medium in dem Vorratsgefäß 5 aufgetaut ist. Umgekehrt ist das Volumen der Versorgungsleitung 9 einschließlich des Kühlmantels 15 bevorzugt so gewählt, dass eine ausreichende Eindosierung von Medium in die Abgasleitung 3 einerseits und eine ausreichende Kühlung der Dosiereinrichtung 7 andererseits bis zu dem Zeitpunkt gewährleistet ist, zu dem das Vorratsgefäß 5 nicht mehr durch gefrorenes Medium blockiert wird.

Bei dem dargestellten Ausführungsbeispiel ist in der Vorlaufleitung 11 eine Pumpe 27 angeordnet, die stromabwärts der Mündung der zusätzlichen Fluidverbindung 23 in die Vorlaufleitung 11 angeordnet ist. Mithilfe der Pumpe 27 ist daher das Medium sowohl unter Einbeziehung des Vorratsgefäßes 5 als auch unter Umgehung desselben zur Kühlung der Dosiereinrichtung 7 im Kreislauf förderbar.

Das Vorratsgefäß 5 weist einen Austritt 29 sowie einen Eintritt 31 für das Medium auf. Es zeigt sich, dass die zusätzliche Fluidverbindung 23 beziehungsweise die Umgehungsleitung 25 den Austritt 29 mit dem Eintritt 31 in der Nähe des Vorratsgefäßes 5, insbesondere an dem Vorratsgefäß 5 verbindet. Insbesondere ist die zusätzliche Fluidverbindung 23 bevorzugt unmittelbar im Bereich des Vorratsgefäßes 5 angeordnet, was anspricht, dass keine weiteren Elemente des Zuführsystems 1 zwischen der zusätzlichen Fluidverbindung 23 und dem Vorratsgefäß 5 angeordnet sind. Besonders bevorzugt ist die zusätzliche Fluidverbindung 23 möglichst nahe an dem Vorratsgefäß 5 beziehungsweise sind deren Mündungen möglichst nahe an dem Austritt 29 und dem Eintritt 31 angeordnet, wobei die entsprechenden Abstände bevorzugt so abgestimmt sind, dass eine Blockierung der Mündungen der zusätzlichen Fluidverbindung 23 in die Vorlaufleitung 11 einerseits und die Rücklaufleitung 13 andererseits durch gefrorenes Medium im Bereich des Austritts 29 und des Eintritts 31 quasi ausgeschlossen ist.

Bei dem dargestellten Ausführungsbeispiel ist ein unmittelbar dem Vorratsgefäß 5 zugewandter Abschnitt der Versorgungsleitung 9, der sich bis zu einer strichpunktierten Linie 33 erstreckt, H-förmig ausgebildet. Dieser Bereich ist vorzugsweise als separates Anschlussstück 35 ausgebildet, welches durch Anschlüsse, insbesondere Steckverbindungen, mit dem Austritt 29 und dem Eintritt 31 einerseits sowie mit der Vorlaufleitung 11 und der Rücklaufleitung 13 andererseits verbindbar ist. Es ist möglich, dass das Anschlussstück 35 einstückig ausgebildet ist. Bei einem anderen Ausführungsbeispiel ist es möglich, dass das Anschlussstück 35 insbesondere aus zwei im Bereich von Längsschenkeln miteinander fluidverbundenen T-Stücken oder anderweitig aus separaten Teilen zusammengesetzt ist. Besonders bevorzugt umfasst das Anschlussstück 35 eine elektrische Heizeinrichtung, durch welche es zum Auftauen von Medium beheizbar ist.

Ein erster Schenkel 37 des H-förmigen Abschnitts bildet einen Teil der Vorlaufleitung 11. Ein zweiter Schenkel 39, der parallel zu dem ersten Schenkel 37 ausgerichtet ist, bildet einen Teil der Rücklaufleitung 13. Schließlich stellt ein dritter, quer zu dem ersten Schenkel 37 und zu dem zweiten Schenkel 39 ausgerichteter Schenkel 41 die zusätzliche Fluidverbindung 23 beziehungsweise die Umgehungsleitung 25 bereit.

In der zusätzlichen Fluidverbindung 23 ist eine Drosseleinrichtung 43 angeordnet, die hier als Bereich mit reduziertem Leitungsquerschnitt ausgebildet ist. Dabei ist der Strömungsquerschnitt durch den reduzierten Leitungsquerschnitt bevorzugt so gewählt, dass bei freigegebenem, mithin nicht blockiertem Kreislauf durch das Vorratsgefäß 5 zumindest eine Hauptmenge des im Kreislauf geförderten Mediums nicht über die zusätzliche Fluidverbindung 23, sondern über das Vorratsgefäß 5 strömt. Ist dagegen der Strömungsquerschnitt des Fluidpfads durch das Vorratsgefäß 5 aufgrund von gefrorenem Medium auf einen Wert unter dem Strömungsquerschnitt im Bereich des reduzierten Leitungsquerschnitts verengt oder vollständig blockiert, strömt das Medium zu einem großen Teil oder sogar vollständig entlang der zusätzlichen Fluidverbindung 23 durch die Drosseleinrichtung 43.

Alternativ ist es möglich, dass in der zusätzlichen Fluidverbindung 23 anstelle der Drosseleinrichtung 43 eine Druckhalteeinrichtung, insbesondere ein Druckhalteventil, vorgesehen ist.

Insgesamt zeigt sich, dass mithilfe des Zuführsystems eine wirksame Kühlung der Dosiereinrichtung 7 gewährleistet werden kann, auch wenn ein Medienkreislauf im Bereich des Vorratsgefäßes 5 durch gefrorenes Medium blockiert ist. Dadurch können Schäden an der Dosiereinrichtung 7 durch thermische Überlastung während einer Auftauphase des Mediums insbesondere im Bereich des Vorratsgefäßes 5 wirksam vermieden werden.

## Patentansprüche

1. Zuführsystem (1) für ein Medium, insbesondere für eine Abgasreinigungsvorrichtung zur Behandlung von Abgasen einer Brennkraftmaschine, mit einem Vorratsgefäß (5) für das Medium, einer Dosiereinrichtung (7) zum Eindosieren des Mediums insbesondere in eine Abgasleitung (3) einer Brennkraftmaschine, und mit einer Versorgungsleitung (9), die eine Vorlaufleitung (11) zur Zuführung des Mediums zu der Dosiereinrichtung (7) und eine Rücklaufleitung (13) zur Rückführung des Mediums von der Dosiereinrichtung (7) in das Vorratsgefäß (5) umfasst, wobei die Dosiereinrichtung (7) so ausgebildet ist, dass sie im Betrieb des Zuführsystems (1) zur Kühlung von dem Medium von einem Vorlaufanschluss (17) zu einem Rücklaufanschluss (19) der Dosiereinrichtung (7) hin durchströmbar ist, wobei die Versorgungsleitung (9) eine zusätzliche Fluidverbindung (23) zwischen der Vorlaufleitung (11) und der Rücklaufleitung (13) umfasst, wobei die zusätzliche Fluidverbindung (23) stromaufwärts des Vorlaufanschlusses (17) der Dosiereinrichtung (7) in die Vorlaufleitung (11) und stromabwärts des Rücklaufanschlusses (19) der Dosiereinrichtung (7) in die Rücklaufleitung (13) mündet, und wobei die zusätzliche Fluidverbindung (23) als Umgehungsleitung (25) ausgebildet ist, durch welche das Medium unter Umgehung des Vorratsgefäßes (5) entlang der Versorgungsleitung (9) förderbar ist, **dadurch gekennzeichnet, dass** in der zusätzlichen Fluidverbindung (23) eine Drosseleinrichtung (43) oder eine Druckhalteeinrichtung angeordnet ist.

2. Zuführsystem (1) nach Anspruch 1 , **dadurch gekennzeichnet, dass** eine Pumpe (27) zur Förderung des Mediums in der Vorlaufleitung (11) oder in der Rücklaufleitung (13) angeordnet ist, wobei die Pumpe (27) stromabwärts der Mündung der zusätzlichen Fluidverbindung (23) in die Vorlaufleitung (11) oder stromaufwärts der Mündung der zusätzlichen Fluidverbindung (23) in die Rücklaufleitung (13) angeordnet ist.

3. Zuführsystem (1) nach einem der vorhergehenden Ansprüche, **dadurch gekennzeichnet, dass** die zusätzliche Fluidverbindung (23) unmittelbar stromaufwärts des Vorratsgefäßes (5) in die Rücklaufleitung (13) und unmittelbar stromabwärts des Vorratsgefäßes (5) in die Vorlaufleitung (11) mündet.

4. Zuführsystem (1) nach einem der vorhergehenden Ansprüche, **dadurch gekennzeichnet, dass** die zusätzliche Fluidverbindung (23) durch mindestens ein T-Stück bereitgestellt wird, wobei das mindestens eine T-Stück Teil der Vorlaufleitung (11) und/oder Teil der Rücklaufleitung (13) ist.

5. Zuführsystem (1) nach einem der vorhergehenden Ansprüche, **dadurch gekennzeichnet, dass** ein unmittelbar dem Vorratsgefäß (5) zugewandter Abschnitt der Versorgungsleitung H-förmig ausgebildet ist, wobei ein erster Schenkel (37) des H Teil der Vorlaufleitung (11) ist, wobei ein hierzu paralleler, zweiter Schenkel (39) des H Teil der Rücklaufleitung (13) ist, und dass die zusätzliche Fluidverbindung (23) durch einen dritten, zu dem ersten und dem zweiten Schenkel (37,39) quer angeordneten Schenkel (41) des H bereitgestellt wird.

6. Zuführsystem (1) nach einem der vorhergehenden Ansprüche, **dadurch gekennzeichnet, dass** die Versorgungsleitung (9) zumindest bereichsweise, insbesondere im Bereich des H-förmigen Abschnitts, beheizbar ausgebildet ist, wobei vorzugsweise eine elektrische Heizeinrichtung oder eine Einrichtung zur Beheizung der Versorgungsleitung (9) mittels Kühlwassers einer Brennkraftmaschine vorgesehen ist.

7. Zuführsystem (1) nach einem der vorhergehenden Ansprüche, **dadurch gekennzeichnet, dass** die Drosseleinrichtung (43) einen Bereich mit reduziertem Leitungsquerschnitt oder ein verstellbares Drosselelement umfasst, oder dass die Druckhalteeinrichtung als Druckhalteventil ausgebildet ist.

8. Zuführsystem (1) nach einem der vorhergehenden Ansprüche, **dadurch gekennzeichnet, dass** das Zuführsystem (1) zur Einleitung eines Reduktionsmittels in eine Abgasleitung (3) einer Brennkraftmaschine ausgebildet ist, wobei vorzugsweise ein Reduktionsmittel in dem Vorratsgefäß (5) des Zuführsystems (1) angeordnet ist.

9. Zuführsystem (1) nach Anspruch 8, **dadurch gekennzeichnet, dass** das Zuführsystem (1) zur Eindosierung einer Harnstofflösung in eine Abgasleitung (3) einer Brennkraftmaschine ausgebildet ist, wobei das Zuführsystem (1) vorzugsweise eine Harnstofflösung, insbesondere eine wässrige Harnstofflösung, in dem Vorratsgefäß (5) aufweist.

## Claims

1. Supply system (1) for a medium, in particular for an exhaust-gas purification apparatus for the treatment of exhaust gases of an internal combustion engine, having a storage vessel (5) for the medium, having a dosing device (7) for dosing the medium in particular into an exhaust line (3) of an internal combustion engine, and having a provision line (9) which comprises a feed line (11) for the supply of the medium to the dosing device (7) and a return line (13) for returning the medium from the dosing device (7) into the storage vessel (5), wherein the dosing device (7) is designed such that, during the operation of the supply system (1), flow can pass through said dosing device from a feed port (17) to a return port (19) of the dosing device (7) for the purpose of cooling the medium, wherein the provision line (9) comprises an additional fluid connection (23) between the feed line (11) and the return line (13), wherein the additional fluid connection (23) opens out into the feed line (11) upstream of the feed port (17) of the dosing device (7) and opens out into the return line (13) downstream of the return port (19) of the dosing device (7), and wherein the additional fluid connection (23) is formed as a bypass line (25) through which the medium can be delivered along the provision line (9) so as to bypass the storage vessel (5), **characterized in that** a throttle device (43) or a pressure-maintaining device is arranged in the additional fluid connection (23).

2. Supply system (1) according to Claim 1, **characterized in that** a pump (27) for delivering the medium is arranged in the feed line (11) or in the return line (13), wherein the pump (27) is arranged downstream of the point at which the additional fluid connection (23) opens out into the feed line (11) or upstream of the point at which the additional fluid connection (23) opens out into the return line (13).

3. Supply system (1) according to one of the preceding claims, **characterized in that** the additional fluid connection (23) opens out into the return line (13) directly upstream of the storage vessel (5) and opens out into the feed line (11) directly downstream of the storage vessel (5).

4. Supply system (1) according to one of the preceding claims, **characterized in that** the additional fluid connection (23) is provided by at least one T-piece, wherein the at least one T-piece is part of the feed line (11) and/or part of the return line (13).

5. Supply system (1) according to one of the preceding claims, **characterized in that** a section of the provision line directly facing the storage vessel (5) is of H-shaped form, wherein a first limb (37) of the H is part of the feed line (11), wherein a second limb (39), parallel to said first limb, of the H is part of the return line (13), and **in that** the additional fluid connection (23) is provided by a third limb (41), arranged transversely with respect to the first and second limbs (37, 39), of the H.

6. Supply system (1) according to one of the preceding claims, **characterized in that** the provision line (9) is designed such that it can be heated at least in regions, in particular in the region of the H-shaped section, wherein an electric heating device or a device for heating the provision line (9) by means of cooling water of an internal combustion engine is preferably provided.

7. Supply system (1) according to one of the preceding claims, **characterized in that** the throttle device (43) comprises a region with reduced line cross section or an adjustable throttle element, or **in that** the pressure-maintaining device is in the form of a pressure-maintaining valve.

8. Supply system (1) according to one of the preceding claims, **characterized in that** the supply system (1) is designed for introducing a reducing agent into an exhaust line (3) of an internal combustion engine, wherein a reducing agent is preferably arranged in the storage vessel (5) of the supply system (1).

9. Supply system (1) according to Claim 8, **characterized in that** the supply system (1) is designed for dosing a urea solution into an exhaust line (3) of an internal combustion engine, wherein the supply system (1) preferably has a urea solution, in particular an aqueous urea solution, in the storage vessel (5).

## Revendications

1. Système d'introduction (1) pour un fluide, en particulier pour un dispositif d'épuration de gaz d'échappement en vue du traitement de gaz d'échappement d'un moteur à combustion interne, avec un réservoir de stockage (5) pour le fluide, avec un dispositif de dosage (7) pour l'introduction dosée du fluide en particulier dans une conduite de gaz d'échappement (3) d'un moteur à combustion interne, et avec une conduite d'alimentation (9), qui comprend une conduite d'arrivée (11) pour l'amenée du fluide au dispositif de dosage (7) et une conduite de retour (13) pour le renvoi du fluide du dispositif de dosage (7) au réservoir de stockage (5), dans lequel le dispositif de dosage (7) est réalisé de telle manière qu'il puisse, lors du fonctionnement du système d'introduction (1) pour le refroidissement, être traversé par le fluide depuis un raccord d'arrivée (17) jusqu'à un raccord de retour (19) du dispositif de dosage (7), dans lequel la conduite d'alimentation (9) comprend une liaison fluidique supplémentaire (23) entre la conduite d'arrivée (11) et la conduite de retour (13), dans lequel la liaison fluidique supplémentaire (23) débouche dans la conduite d'arrivée (11) en amont du raccord d'arrivée (17) du dispositif de dosage (7) et dans la conduite de retour (13) en aval du raccord de retour (19) du dispositif de dosage (7), et dans lequel la liaison fluidique supplémentaire (23) est réalisée sous forme de conduite de contournement (25), par laquelle le fluide peut être transporté le long de la conduite d'alimentation (9) en contournant le réservoir de stockage (5), **caractérisé en ce qu'**un dispositif d'étranglement (43) ou un dispositif de maintien de pression est disposé dans la liaison fluidique supplémentaire (23).

2. Système d'introduction (1) selon la revendication 1, **caractérisé en ce qu'**une pompe (27) pour le transport du fluide est disposée dans la conduite d'arrivée (11) ou dans la conduite de retour (13), dans lequel la pompe (27) est disposée en aval de l'embouchure de la liaison fluidique supplémentaire (23) dans la conduite d'arrivée (11) ou en amont de l'embouchure de la liaison fluidique supplémentaire (23) dans la conduite de retour (13).

3. Système d'introduction (1) selon l'une quelconque des revendications précédentes, **caractérisé en ce que** la liaison fluidique supplémentaire (23) débouche dans la conduite de retour (13) immédiatement en amont du réservoir de stockage (5) et dans la conduite d'arrivée (11) immédiatement en aval du réservoir de stockage (5) .

4. Système d'introduction (1) selon l'une quelconque des revendications précédentes, **caractérisé en ce que** la liaison fluidique supplémentaire (23) est créée par au moins une pièce en T, dans lequel ladite au moins une pièce en T fait partie de la conduite d'arrivée (11) et/ou fait partie de la conduite de retour (13).

5. Système d'introduction (1) selon l'une quelconque des revendications précédentes, **caractérisé en ce qu'**une partie de la conduite d'alimentation tournée directement vers le réservoir de stockage (5) est réalisée en forme de H, dans lequel une première branche (37) du H fait partie de la conduite d'arrivée (11), dans lequel une deuxième branche (39) du H parallèle à celle-ci fait partie de la conduite de retour (13), et **en ce que** la liaison fluidique supplémentaire (23) est créée par une troisième branche (41) du H disposée transversalement à la première et à la deuxième branches (37, 39).

6. Système d'introduction (1) selon l'une quelconque des revendications précédentes, **caractérisé en ce que** la conduite d'alimentation (9) peut être chauffée au moins localement, en particulier dans la région de la partie en forme de H, dans lequel il est de préférence prévu un dispositif de chauffage électrique ou un dispositif pour le chauffage de la conduite d'alimentation (9) au moyen d'eau de refroidissement d'un moteur à combustion interne.

7. Système d'introduction (1) selon l'une quelconque des revendications précédentes, **caractérisé en ce que** le dispositif d'étranglement (43) comprend une région avec une section transversale de conduite réduite ou un élément d'étranglement réglable, ou **en ce que** le dispositif de maintien de pression est formé par une soupape de maintien de pression.

8. Système d'introduction (1) selon l'une quelconque des revendications précédentes, **caractérisé en ce que** le système d'introduction (1) est configuré pour l'introduction d'un agent réducteur dans une conduite de gaz d'échappement (3) d'un moteur à combustion interne, dans lequel un agent de réduction est de préférence disposé dans le réservoir de stockage (5) du système d'introduction (1).

9. Système d'introduction (1) selon la revendication 8, **caractérisé en ce que** le système d'introduction (1) est configuré pour l'introduction dosée d'une solution d'urée dans une conduite de gaz d'échappement (3) d'un moteur à combustion interne, dans lequel le système d'introduction (1) présente de préférence une solution d'urée, en particulier une solution aqueuse d'urée, dans le réservoir de stockage (5).
